# EUROPEAN PATENT SPECIFICATION

(11) **EP 0 874 216 B1**
(45) Date of publication and mention of the grant of the patent: **18.08.2004**
(21) Application number: 98303130.3
(22) Date of filing: 23.04.1998
(51) Int. Cl.: G01B 9/04, G02B 21/00

(54) **Optical probe, method of manufacturing an optical probe, and scanning probe microscope**
Optische Sonde, Herstellungsverfahren einer optischen Sonde und Rastersondenmikroskop
Sonde optique, procédé de fabrication d'une sonde optique et microscope à sonde de balayage

(30) Priority: 23.04.1997 JP 10643097; 03.03.1998 JP 5116798
(43) Date of publication of application: 28.10.1998
(73) Proprietor: SEIKO INSTRUMENTS INC., Chiba-shi, Chiba 261 (JP); AGENCY OF INDUSTRIAL SCIENCE AND TECHNOLOGY, Chiyoda-ku Tokyo (JP)
(72) Inventor: Fujihira, Masamachi, Kawasaki-shi, Kanagawa (JP); Muramatsu, Hiroshi, Mihama-ku, Chiba-shi, Chiba (JP); Yamamoto, Noritaka, Mihama-ku, Chiba-shi, Chiba (JP); Hiraga, Takashi, 1-4-1 Umezono, Tsukuba-shi, Ibaraki (JP); Moriya, Tetsuo, 1-4-1 Umezono, Tsukuba-shi (JP); Mito, Akihiro, 1-4-1 Umezono, Tsukuba-shi, Ibaraki (JP)
(74) Representative: Sturt, Clifford Mark

(56) References cited:
- EP-A- 0 636 914
- EP-A- 0 752 601
- JIANG S ET AL: "REFLECTION-RESONANCE-TYPE PHOTON SCANNING TUNNELING MICROSCOPE" JAPANESE JOURNAL OF APPLIED PHYSICS, vol. 33, no. 1A, PART 02, 1 January 1994, pages 55-58, XP000750010

## Description

This invention relates to an optical probe used in a near-field effect microscope for the purpose of observing topography or measuring photo-physical properties of a solid surface in the nano-meter range by optically illuminating or photo-exciting a surface to be measured. The invention also relates to a method of manufacturing the optical probe and a scanning probe microscope using this optical probe.

Conventionally, there has been used a probe possessing a microscope aperture as an optical probe for near-field effect microscopes. The basic principle of this microscopic-aperture optical probe is disclosed in US Patent 4604520. The basic structure has a metal coating formed in a thickness of less than 200 nanometers over a portion of a quartz rod except the tip portion thereof. The probe has a sharply edged tip so as to form an aperture smaller than the wavelength of light at the tip. An evanescent field can be formed at the microscope aperture of the tip by introducing light through a light inlet port provided at the opposite end of the probe to the aperture. Also, a method for forming such an optical probe having a microscope aperture is disclosed in J. Vac. Sci. Technol. B3, 386 (1985). In that arrangement, a metal film is deposited on a glass surface having fine particles thereon. Thereafter the fine particles are removed, thus forming a microscopic aperture. Further, a probe manufacturing method is disclosed in US Patent 4917462. In that arrangement, a glass tube is extended by heat until it is fractured so as to coat a metal film over a lateral surface of the glass while forming a tip in the form of a thinned glass tube providing a microscopic aperture. Also, US Patent 5272330 discloses a probe manufacturing method in which an optical fibre is extended until it is thermally fractured. Again, this provides a metal-coated lateral surface with a microscopic aperture at the tip portion of the thinned optical fibre.

A reflection-resonance-type photon scanning tunnelling microscope is disclosed by Jiang et al in Japan Journal Applied Physics Vol. 33 (1994), pages 55 to 58. A fibre Fabry-Perot cavity is used as the probe and one of the probe-cavity facets has a sub-wavelength aperture out of which evanescent light leaks.

A functional probe is disclosed by Lewis et al. in Nature 354, 1991, p. 214. In that arrangement light is introduced into a functional probe comprising a glass tube having a probe tip packed with a fluorescent substance. The arrangement uses the fluorescent light as a microscopic light source. This method, however, presents problems in that the microscopic light source wavelength is restricted in selection and the light source intensity gradually decreases as the fluorescent light fades.

The problem in the above microscopic-aperture optical probe lies in that the intensity of the evanescent field at the microscopic aperture is greatly decreased, to as little as 1/1000 to 1/10000, with respect to the intensity of incoming light. This acts to prevent against observations of samples at high S/N or processing/writing at high scanning speeds.

It is an object of the present invention to provide an optical probe and a method of manufacturing an optical probe, which can increase the intensity of the light within the optical probe so as to increase the strength of the evanescent field created at the microscopic aperture. The optical probe of this invention has a microscopic aperture and is an optical resonator or a part thereof; despite the fact that the conventional optical probe utilising a near-field effect suffers large attenuation in the strength of the evanescent field with respect to the incoming light.

It is a further object of the present invention to provide a scanning probe microscope which can carry out scanning probe microscope observations despite the presence of a high S/N ratio. This can contribute to broaden the application range for fluorescent image observations, Raman spectroscopy in a microscopic range, and time-resolved spectroscopy. Also, in memory applications the write speed can be increased.

Embodiments of the present invention will now be described, by way of example only and with reference to the accompanying drawings, in which:-
FIG. 1 is a structural view showing a first embodiment of an optical probe of the present invention;
FIG. 2 is a structural view showing a second embodiment of the optical probe of the present invention;
FIG. 3 is a structural view showing a third embodiment of the optical probe of the present invention;
FIG. 4 is a structural view showing a fourth embodiment of the optical probe of the present invention;
FIGs. 5A, 5B, 5C, 5D, 5E, 5F and 5G are manufacture process views showing an optical probe according to the present invention;
FIGs. 6A and 6B are manufacture process views showing an optical probe according to the present invention;
FIGs. 7A and 7B are structural views showing a cantilever using an optical probe which embodies the present invention;
FIG. 8 is a typical view showing an optical system for short-pulse light response characteristic evaluation with an optical fibre probe which embodies the present invention; and
FIG. 9 is a structural view showing a scanning probe microscope using an optical probe which embodies the present invention.

In order to solve the above stated problem with conventional arrangements, there is provided an optical probe for use in a near-field effect microscope for performing topographical observation and physical property measurement on a surface of a solid comprising an optical fibre constituted as an optical resonator; a reflecting mirror formed by a dielectric multilayered thin film or a metal thin film at one end face of said optical fibre; a light transmitting bore provided at the end face thereof; and a resonant characteristic adjusting mechanism which adjusts the resonator Q factor for a particular wavelength of light.

An optical probe having an optical resonator or part thereof formed by an optical probe having a microscopic aperture with an increase in the intensity of the light within the optical probe, so that an evanescent field formed at the microscopic aperture portion is increased as compared to conventional probes.

Preferably, there is provided an optical resonator constituted by an optical fibre that has a microscopic aperture with a diameter of approximately from 50 nanometers to 200 nanometers. Light is externally incident onto the fibre so as to strengthen the photoelectric field within the optical fibre to a level higher than in the case of not using an optical resonator. Thus, there is an increase in the intensity of evanescent waves radiated through the microscopic aperture. In a detailed structural example of the optical resonator; a dielectric multilayered film or a metal thin film with a reflectivity of 95% or higher, preferably 99% or higher, is coated over the fibre and then a microscopic aperture is provided. The fibre having a length of several cm is worked at one end by optical polishing to a planar accuracy of λ/20 or finer and parallelism of 1° or smaller. It is then coated with a dielectric multilayered film having a reflectivity of 85 - 90%. Laser light is introduced through this surface via an objective lens as an optical coupler. The light confined within the optical fibre is amplified within the resonator while it reciprocates between the dielectric multilayered films or metal films placed on the opposite ends. Thus, an evanescent light with a strong electric field strength can be withdrawn through the microscopic aperture.

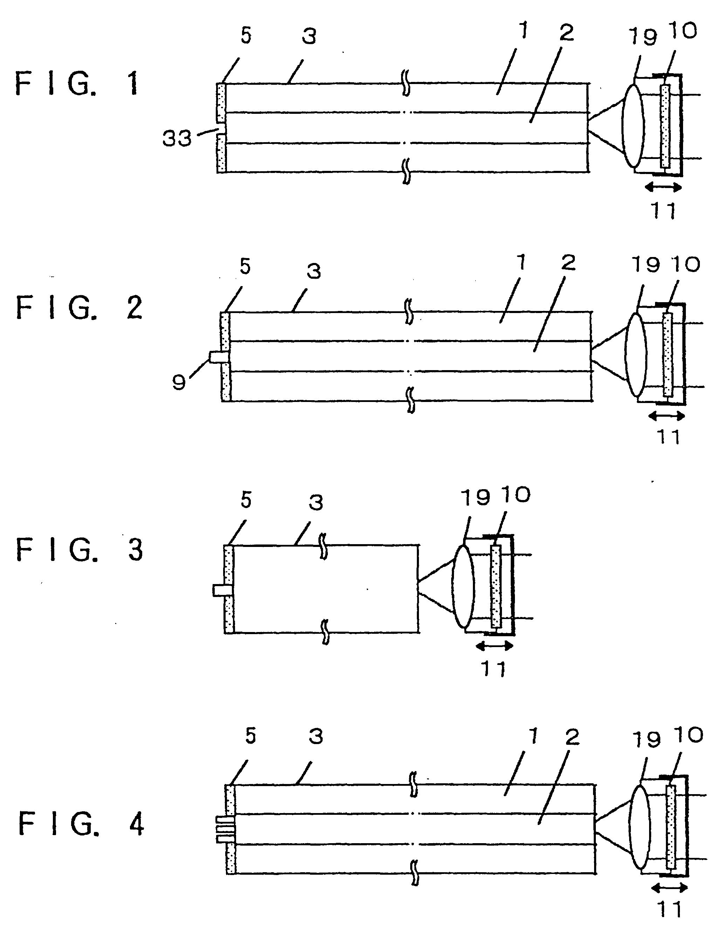

FIG. 1 is a view representing a structure of an optical probe showing a first embodiment of the present invention. The optical probe is constituted by an SiO₂ fibre 3 formed by a core layer 2 for propagating light and a cladding layer 1 having a different refractive index therefrom. The fibre is formed, at one end face, with a dielectric multilayered film 5 of MgF₂/ZrO₂ having a microscopic transmission bore 33. A coupling lens 19 and a dielectric multilayerd film 10 are provided at the other end face of the fibre compared with film 5. The dielectric multilayered film 10 is movable in the directions indicated by the arrows using a resonator length/parallelism adjusting mechanism 11. The resonator can thus be adjusted in its length and parallelism. The resonator is enhanced in Q factor by this adjustment. The resonator length/parallelism adjusting mechanism 11 is constituted by a piezoelectric element. Thus, it is possible to determine the moving amount of the dielectric multilayered film by controlling the applied voltage. The SiO₂ fibre 3 used can be a single mode fibre, a step index fibre, a graded index fibre, a polarisation plane holding fibre, or the like. Also, the coupling lens 19 can be placed between the dielectric multilayered film 10 and the optical fibre, or on the other side of the film 10. The coupling lens used can be an objective lens of the type used for microscopes, or an objective lens used through a refractive index aligning oil, or the like. It is possible to modulate the light coming from the optical probe by the length adjusting mechanism for the resonator. The structure of the optical probe as above can amplify the light introduced into the inside of the optical probe by the optical resonator. Thus, the evanescent light withdrawn through the tip of the optical probe is intensified. This enables measurement in a short time and high-speed scanning when writing into a memory, or the like.

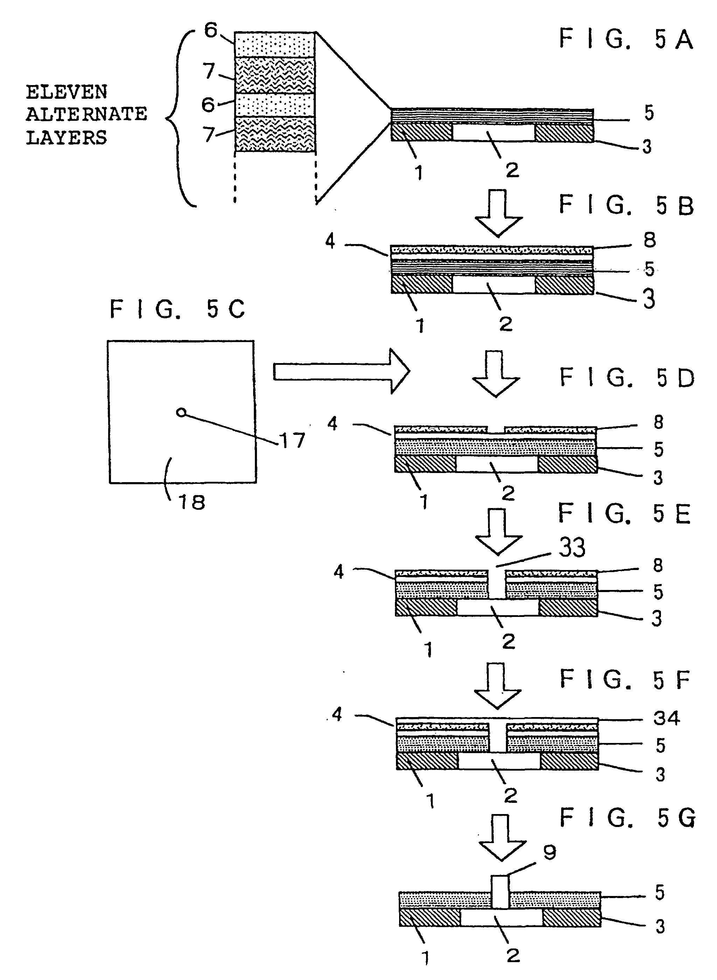

FIG. 2 shows the structure of an optical probe according to a second embodiment of the present invention. A microscopic projection 9 is provided in place of the microscopic bore 33. This is advantageous for observing a sample surface which has a large roughness. The effect and operation of this embodiment is the same as in the first embodiment except that the shape of the tip portion of the optical probe is different.

FIG. 3 shows the structure of an optical probe according to a third embodiment of the present invention. Since the optical probe uses as its material a quartz rod having a length of approximately 100 µm and the probe size can be reduced, it is possible to use a probe chip like a cantilever. Also, the dielectric multilayered film can be utilised as a reflecting mirror for optical levers. The effect and operation of this embodiment is the same as in the first embodiment except that the shape of the tip portion of the optical probe is different.

FIG. 4 shows the structure of an optical probe according to a fourth embodiment of the present invention. The optical probe has, at its tip, a plurality of microscopic projections formed of SiO₂. The arrangement is advantageous for observing the movement of excited energy causing between atoms or molecules present at a distance between the projections. Although in this embodiment 9, i.e. 3 x 3, microscopic projections are exemplified, the number of the projections is not limited to this. The effect and operation of the embodiment is the same as in the first embodiment except that the shape of a tip portion of the optical probe is different.

FIGs. 5A, 5B, 5C, 5D, 5E, 5F and 5G show the fabrication process of an optical probe according to the present invention. First an SiO₂ optical fibre 3 is placed in a vacuum depositing apparatus. The fibre is a single-mode optical fibre having mirror-polished end faces, a length of approximately 20 cm, MgF₂ and ZrO₂ as a thin film material, and Cr as a metal mask material. The vacuum is reduced to a pressure of approximately 10⁻⁵ Pa. Thereafter, ZrO₂ is evaporated by means of an electron-beam melting method, a resistance heating method, or the like. A ZrO₂ layer 6 is deposited to a film thickness of 97.56 nm so that the product of the ZrO₂ refractive index 2.05 and the film thickness becomes 200 nm, that is a quarter of the wavelength of the light source used. At this time, an oxygen gas is introduced into the vacuum apparatus in order to avoid deviation from a stoichiometric composition. Then, MgF₂ is evaporated similarly to the case of ZrO₂; to deposit an MgF₂ layer 7 to a film thickness of 144.93 nm so that the product of the MgF₂ refractive index 1.38 and the film thickness becomes 200 nm, that is a quarter of the wavelength of the light source used. FIG. 5A shows an optical fibre that is deposited with eleven alternate layers of ZrO₂ layers 6 and MgF₂ layers 7 by repeating the above steps.

Thereafter, Cr layer 4 is deposited to a film thickness of approximately 1 µm as a mask for dry-etching the MgF₂/ZrO₂ layer 5 (dielectric multilayered film). Then the fibre is removed from the vacuum apparatus and photoresist 8 is applied by a spin coater or the like to a film thickness of approximately 1 µm. Here, TiN, TiW or the like may be used in place of Cr. FIG. 5B shows the fibre with the described films.

A photomask 18, which is patterned with a bore 17 opened by ion-beam to a diameter of 500 nm is used, as shown in FIG. 5C. The optical fibre of FIG. 5B, with the photoresist 8 applied, is subject to reduced-projection exposure (1/5) and placed in a vacuum apparatus provided with both a dry etch mechanism and a CVD mechanism. FIG. 5D shows the photoresist 8 processed to the pattern of FIG. 5C. Then, the Cr layer 4 (metal mask layer) is etched by using a reactive gas such as Cl₂; thus forming a mask for etching the dielectric multilayered film 5 (MgF₂/ZrO₂ layer).

Next, the ZrO₂ layer is etched using a reactive gas such as Cl₂, followed by etching the MgF₂ layer also using a reactive gas such as Cl₂. Then, the ZrO₂ layer is etched again using a reactive gas such as Cl₂. FIG. 5E shows a bore 33, with a diameter of 100 nm, which is opened by repeating the etchings alternately.

In order to implement a manufacturing method for forming a thin dielectric multilayered film with a reflectivity of approximately 85 - 90% on the end face of the fibre; a fluorine-based gas such as C₂F₆ or the like or a chlorine-based gas such as Cl₂ or the like or a gas containing both gases such as ClF₃, or the gas mixture of them is introduced into a vacuum apparatus. The arrangement is used to alternately deposit a dielectric thin film with a low refractive index, such as MgF₂, SiO₂ or the like, and a dielectric thin film with a high refractive index, such as ZrO₂, TiO₂, TaO₄ or the like. It is possible to combine a dry etch method, which uses plasma caused by applying a high-frequency high voltage to an electrode installed in the vacuum chamber, with a mask forming method, which uses photoresist employed for a semiconductor manufacturing process, and a reduced-projection exposure method. It is possible to adopt all know techniques as to the dielectric substance, the etch gas, the form and kind of the electrode, the frequency of the high-frequency wave, the type of photoresist, and so on, and the invention is not limited to those described above.

The processes described so far are satisfactory when manufacturing an optical probe with a microscopic transmission bore. However, where manufacturing an optical probe having a microscopic projection 9 according to the second embodiment of the present invention, the process is advanced by several further steps.

In order to make a microscopic projection 9, an SiO₂ layer 34 is first deposited in the 100-nm diameter bore by a CVD mechanism using gasses of SiH₄, oxygen and the like. FIG. 5F shows a state that the surface of the optical probe is covered by the SiO₂ layer 34.

Thereafter, after withdrawing the fibre from the vacuum apparatus, the metal mask is removed using a nitric-acid based stripping solution, to make a microscopic projection as shown in FIG. 5C.

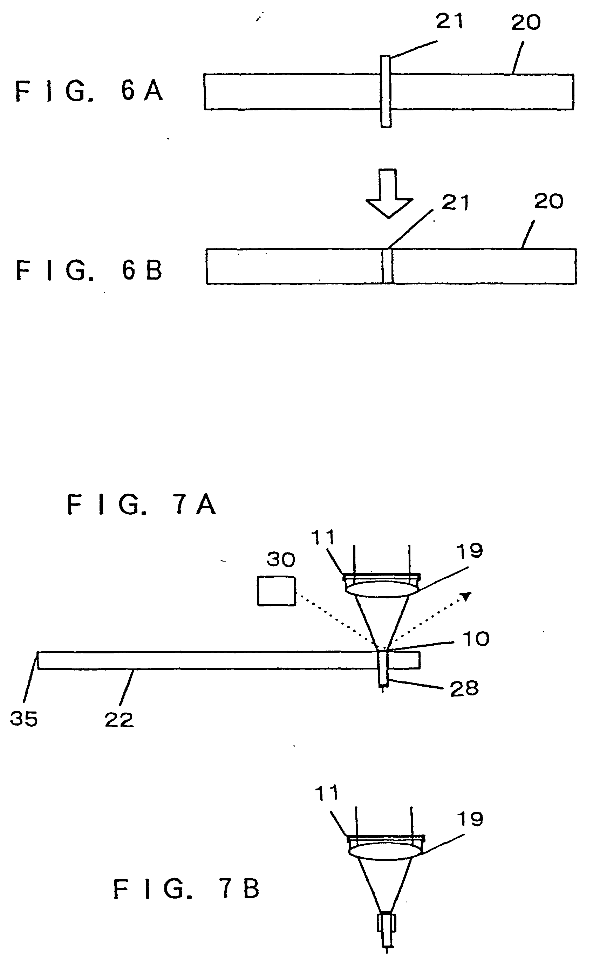

FIGS. 6A and 6B show a manufacturing process for an optical probe according to a third embodiment of the present invention. A quartz rod is employed for an optical probe material. In order to mirror-polish an end face of the quartz rod 21, which has a diameter of 20 µm, a bore is opened through the centre of a stainless-made jig 20. Jig 20 is a 30-mm square with a thickness of 100 µm. The quartz rod 21 having a diameter of 20 µm and a length of 200 µm is fixed therein with an adhesive (FIG. 6A) and mirror-polished by machine polishing (FIG. 6B). The quartz rod 21 thus polished is formed with a dielectric multilayered film (MgF₂/ZrO₂ layer) and a microscopic transmission bore 33, thereby making a Fabry-Perot resonator type optical probe. If the process of making a microscopic projection 9 is further performed, an optical probe of the third embodiment, shown in FIG 3, is achieved.

The optical probe thus made is fixed with an adhesive or the like in a bore portion of a holder 22. The holder 22 has a length of several mm, a width of 50µm and a height of 50µm, as shown in FIG. 7A (front view) and FIG. 7B (side view). Fixing one end 35 of the holder 22 enables utilisation of the probe as a probe chip cantilever. Light from an optical-lever light source is introduced in the direction shown in Fig 7A and a dielectric multilayered film 10, positioned at a terminal end of the optical probe, is utilised as a reflecting mirror. The arrangement thereby functions as an optical lever.

The optical probe of the fourth embodiment of the present invention can be made in a similar process to that of the first and second embodiments. The only difference is the use of a pattern having a 3 x 3 matrix of nine bores formed in the photomask.

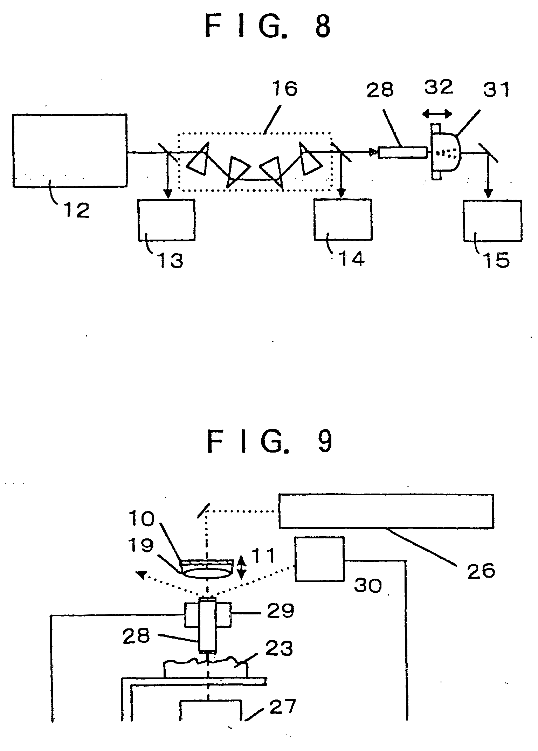

FIG 8 shows an optical system of a short-pulse optical response characteristic evaluating apparatus used for evaluating the optical probes made according to the described embodiments. A titanium-sapphire laser having a basic wavelength of 800 nm and a pulse width of 40 fs is used as a light source. The light from the light source 12 was measured as to its pulse width and spectrum width by a (correlator-A/spectroscope-A) 13. It was confirmed that the Fourier transformation limiting pulse was 40 fs and 24 nm. This light pulse was passed by a distributed controller 16, constituted by four Brewster prisms, so as to be provided with a negative group velocity distribution. This is measured as to pulse width and spectrum width by a (correlator-B/spectroscope-B) 14. The result was 69 fs and 7 nm. This light was input to an optical probe 28 made according to the first embodiment of the present invention. The output from the probe was measured as to pulse width and spectrum width by a (correlator- C/spectroscope-C) 15. The result was a minimum value of the pulse width of 43 fs and a maximum value of the spectrum width of 22 nm. These values show a Fourier transformation limiting pulse similarly to the value measured by the (correlator-A/spectroscope-A) 13. Thus showing that a positive distribution due to the optical probe 28 is compensated for by the distribution controller 16. The flat convex lens 31 was slightly moved by a coupling-constant varying mechanism 32 using a piezoelectric element so as to adjust the distance from the optical probe. When the distance between the flat convex lens 31 and the optical probe 28 is 40 nm, the Fourier transformation limiting pulse was obtained. If this distance is increased, the optical coupling through an evanescent light is weakened to increase the positive group velocity distribution. Accordingly, compensation using a prism distribution controller is impossible and the pulse width is broadened without forming a Fourier transformation limiting pulse. A distribution controller using a diffraction grating in place of the four Brewster prisms has an equivalent function.

The test was carried out for an optical fibre probe made according to the second embodiment of the present invention. The pulse width and spectrum width measured by (correlator-C/spectroscope-C) 15 gave a minimum value of the pulse width of 41 fs and a maximum value of the spectrum width of 23 nm. These values show a Fourier transformation limiting pulse similarly to the value measured by the (correlator-A/spectroscope-A) 13. Thus showing that a positive distribution due to the optical probe is compensated for by the distribution controller. As a result of various evaluations on this probe, similar effects to the first embodiment were obtained.

Results similar to those with the first and second embodiments were obtained in a short-pulse pass characteristic evaluating experiment for the optical probe of the third embodiment of the present invention. Also, various observations and measurements were carried out by attaching the present optical probe to a scanning probe microscope device similarly to the first and second embodiments. As a result in an emission spectrochemical measurement the emission light intensity was approximately 9 times that of the first embodiment case. The time dependent profile in emission light intensity became long in attenuation time compared with the first embodiment. This shows that the moving process in an excitation state is suppressed by simultaneous excitations at several nearby points.

FIG 9 shows one example of a structure in which an optical probe according to the present invention is attached to a scanning probe microscope. The basic structure is an ATM operating mechanism which detects a force acting between the probe and a sample to control the distance therebetween so that it remains constant. An optical probe according to the present invention can be used in place of a cantilever; without changing the apparatus. In the optical lever 30, the dielectric multilayered film 10 made at the terminal end of the optical probe can be used as a reflecting mirror. If the light from a light source 26 is introduced into the optical probe, an evanescent field amplified as a resonator can be created to provide favourable S/N measurements. Also, it is possible to withdraw light through the optical probe from a sample side by reversing in position an optical characteristic measuring light detecting means 27 and a optical characteristic measuring light source 26. When measuring fluorescent light from the sample, the dielectric multilayered film 10 made on the optical probe functions as a wavelength-selecting filter for cutting excitation light so as to transmit fluorescent light.

The result of various observations and measurements are described herein below. First, observation was made of a checker pattern which had been etched alternately to a 1-µm square of 20-nm Cr thin film on glass. As a result, an image having an optical resolving power could be observed at approximately 100 nm. In particularly, since the probe of the present invention has a high light intensity, an image with a high S/N ratio in the optical signal could be obtained.

Then, as a test of spectroscopic measurement, a time dependent profile measurement was made as to emission light spectrum and emission light intensity on a sample. The sample was made by mixing PMMA with DODCI (3, 3' - diethyl oxadicarbocyanine) which was evaporated and hot compressed. An optical probe according to the present invention was tested using 532-nm wavelength light from a Nd:YAG laser. As a result, it was confirmed that the light emission peak wavelength is shifted toward a longer wavelength and shortened in fluorescent life for a high concentration DODCI sample compared with a diluted DODCI sample.

An optical probe according to the present invention and using a 400-nm wavelength light source was applied in the emission spectrochemical measurement of a solid surface. The sample tested was manufactured by dissolving PMMA and rhodamine 6G in acetone to provide a thin-film formed by a spin-coater. The light source used was the above-stated titanium-sapphire laser. The result of the test was a time dependent measurement profile with clear light emission spectrum and light emission intensity.

## Claims

1. An optical probe for use in a near-field effect microscope for performing topographical observation and physical property measurement on a surface of a solid, comprising:
an optical fibre (3) constituted as an optical resonator;
a reflecting mirror formed by a dielectric multilayered thin film (5) or a metal thin film at one end face of said optical fibre;
a light transmitting bore (33) provided at the end face thereof; and
a resonant characteristic adjusting mechanism (11) which adjusts the resonator Q factor for a particular wavelength of light.

2. The optical probe as claimed in claim 1, wherein
said optical fibre (3) is formed by a quartz rod; and wherein
said light transmitting bore (33) is provided at the end face thereof so as to constitute a Fabry-Perot resonator.

3. The optical probe as claimed in claim 1 or claim 2, wherein said transmitting bore (33) for transmitting the light is a microscopic projection (9) formed of a dielectric material.

4. The optical probe as claimed in claim 1 or claim 2, wherein said optical probe has two or more transmitting bores (33) at the end face thereof.

5. The optical probe as claimed in claim 1 or claim 2, wherein said optical resonator includes a mirror in the form of a wavelength selecting film having a high reflectivity for a particular wavelength of light.

6. The optical probe as claimed in claim 1, wherein said optical fibre is one of a single mode fibre, a step index fibre, a graded index fibre, and a polarisation plane keeping fibre.

7. The optical probe as claimed in claim 1 or claim 2, further comprising a reflecting mirror formed by a dielectric multilayered film (10) or a metal thin film at the other end face of said optical fibre.

8. The optical probe as claimed in claim 1 or claim 2, further comprising a reflecting mirror formed by a coupling lens (19) and a dielectric multilayered thin film (10) at the other end face of said optical fibre.

9. The optical probe as claimed in claim 1 or claim 2, further comprising a reflecting mirror of a dielectric multilayered thin film (10) provided through a refractive index aligning oil at the other end face of said optical fibre and a coupling lens (19) provided there outside.

10. The optical probe as claimed in claim 1 or claim 2, wherein said resonant characteristic adjusting mechanism is a piezoelectric element.

11. A method of manufacturing an optical probe, comprising the steps of:
forming a dielectric multilayered film (5) by alternately depositing at one end of an optical fibre a dielectric thin film having a low refractive index (7) and a dielectric thin film having a high refractive index (6) ;
forming an etch mask (4) on said dielectric multilayered film (5); and dry-etching said dielectric multilayered film (5) to form a light transmitting bore (33) at a tip of said optical probe.

12. The method of manufacturing an optical probe as claimed in claim 11, further comprising the steps of:
forming a thin film (34) using a dielectric material at said light transmitting bore (33); and
etching said formed thin film (34) to form a microscopic projection (9).

13. A scanning probe near-field effect microscope comprising the optical probe as claimed in claim 1 or claim 2, comprising:
means for vibrating said optical probe;
means for detecting a displacement of said optical probe;
control means for controlling the distance between said optical probe and a sample; and
a control mechanism for controlling movement of a dielectric multilayered film and a lens provided at one end of said optical probe.

## Patentansprüche

1. Optische Sonde zur Verwendung in einem Nahfeldeffektmikroskop zum Durchführen einer topographischen Betrachtung und einer Messung einer physikalischen Eigenschaft an einer Oberfläche eines Festkörpers, umfassend:
eine als optischer Resonator ausgebildete optische Faser (3);
einen Reflektionsspiegel, welcher durch einen dielektrischen mehrschichtigen Dünnfilm (5) oder einen metallischen Dünnfilm an einer Endfläche der optischen Faser gebildet ist;
eine Lichtdurchtrittsbohrung (33), welche an der Endfläche derselben bereitgestellt ist; und
einen Resonanzcharakteristik-Einstellmechanismus (11), welcher den Q-Faktor des Resonators für eine bestimmte Lichtwellenlänge einstellt.

2. Optische Sonde nach Anspruch 1, in welcher die optische Faser (3) durch einen Quartzstab gebildet ist und in welcher die Lichtdurchtrittsbohrung (33) an der Endfläche derselben derart bereitgestellt ist, dass ein Fabry-Perot-Resonator gebildet wird.

3. Optische Sonde nach Anspruch 1 oder Anspruch 2, in welcher die Durchtrittsbohrung (33) zum Durchlassen des Lichts ein aus einem dielektrischen Material gebildeter mikroskopischer Vorsprung (9) ist.

4. Optische Sonde nach Anspruch 1 oder Anspruch 2, wobei die optische Sonde zwei oder mehr Durchtrittsbohrungen (33) an ihrer Endfläche aufweist.

5. Optische Sonde nach Anspruch 1 oder Anspruch 2, in welcher der optische Resonator einen Spiegel in Form eines Wellenlängenselektionsfilms umfasst, welcher für eine bestimmte Lichtwellenlänge ein hohes Reflexionsvermögen aufweist.

6. Optische Sonde nach Anspruch 1, in welcher die optische Faser eine Einmodenfaser oder eine Stufenfaser oder eine Gradientenfaser oder eine die Polarisationsebene beibehaltende Faser ist.

7. Optische Sonde nach Anspruch 1 oder Anspruch 2, welche ferner einen Reflexionsspiegel umfasst, der durch einen dielektrischen mehrschichtigen Film (10) oder einen metallischen Dünnfilm an der anderen Endfläche der optischen Faser gebildet ist.

8. Optische Sonde nach Anspruch 1 oder Anspruch 2, welche ferner einen Reflexionsspiegel umfasst, der durch eine Kopplungslinse (19) und einen dielektrischen mehrschichtigen Dünnfilm (10) an der anderen Endfläche der optischen Faser gebildet ist.

9. Optische Sonde nach Anspruch 1 oder Anspruch 2, welche ferner einen Reflexionsspiegel aus einem dielektrischen mehrschichtigen Dünnfilm (10) umfasst, der durch ein Brechungsindex-Anpassungs-Öl an der anderen Endfläche der optischen Faser und eine außen dort vorgesehene Kopplungslinse (19) bereitgestellt ist.

10. Optische Sonde nach Anspruch 1 oder Anspruch 2, in welcher der Resonanzcharakteristik-Einstellmechanismus ein piezoelektrisches Element ist.

11. Verfahren zum Herstellen einer optischen Sonde, welches die folgenden Schritte umfasst:
Ausbilden eines dielektrischen mehrschichtigen Films (5), in dem an einem Ende einer optischen Faser abwechselnd ein dielektrischer Dünnfilm mit einem niedrigen Brechungsindex (7) und ein dielektrischer Dünnfilm mit einem hohen Brechungsindex (6) aufgebracht wird; Ausbilden einer Ätzmaske (4) an dem dielektrischen mehrschichtigen Film (5); und
Trockenätzen des dielektrischen mehrschichtigen Films (5), um eine Lichtdurchtrittsbohrung (33) an einer Spitze der optischen Sonde auszubilden.

12. Verfahren zum Herstellen einer optischen Sonde nach Anspruch 11, weches ferner die folgenden Schritte umfasst:
Ausbilden eines Dünnfilms (34) unter Verwendung eines dielektrischen Materials an der Lichtdurchtrittsbohrung (33) und
Ätzen des ausgebildeten Dünnfilms (34), um einen mikroskopischen Vorsprung (9) auszubilden.

13. Nahfeldeffektmikroskop mit Abtastsonde, umfassend die optische Sonde nach Anspruch 1 oder Anspruch 2, welches umfasst:
Mittel zum Vibrieren der optischen Sonde;
Mittel zum Erfassen einer Verlagerung der optischen Sonde; Steuer/Regelmittel zum Steuern/Regeln des Abstands zwischen der optischen Sonde und einer Probe und
einen Steuer/Regelmechanismus zum Steuern/Regel einer Bewegung eines dielektrischen mehrschichtigen Films und einer an einem Ende der optischen Sonde bereitgestellten Linse.

## Revendications

1. Sonde optique destinée à être utilisée dans un microscope à effet de champ proche pour réaliser des observations topographiques et une mesure des propriétés physiques sur une surface d'un solide, comprenant :
une fibre optique (3) constituée comme un résonateur optique ;
un miroir réfléchissant formé par un film mince multicouche diélectrique (5) ou un film mince métallique au niveau d'une face d'extrémité de ladite fibre optique ;
un alésage de transmission de lumière (33) prévu au niveau de la face d'extrémité de celle-ci ; et
un mécanisme d'ajustement des caractéristiques de résonance (11) qui règle le facteur Q de résonance pour une longueur d'onde particulière de lumière.

2. Sonde optique selon la revendication 1, dans laquelle :
ladite fibre optique (3) est formée par une tige en quartz ; et dans laquelle
ledit alésage de transmission de lumière (33) est prévu au niveau de la face d'extrémité de celle-ci de manière à constituer un résonateur de Fabry-Pérot.

3. Sonde optique selon la revendication 1 ou la revendication 2, dans laquelle ledit alésage de transmission (33) destiné à transmettre la lumière est une projection microscopique (9) formée d'un matériau diélectrique.

4. Sonde optique selon la revendication 1 ou la revendication 2, dans laquelle ladite sonde optique comprend deux alésages de transmission (33) ou plus au niveau de la face d'extrémité de celle-ci.

5. Sonde optique selon la revendication 1 ou la revendication 2, dans laquelle ledit résonateur optique comprend un miroir sous la forme d'un film de sélection de longueur d'onde présentant une réflectivité élevée pour une longueur d'onde particulière de lumière.

6. Sonde optique selon la revendication 1, dans laquelle ladite fibre optique est une parmi une fibre en mode simple, une fibre à saut d'indice, une fibre à gradient d'indice et une fibre à maintien de plan de polarisation.

7. Sonde optique selon la revendication 1 ou la revendication 2, comprenant en outre un miroir réfléchissant formé par un film multicouche diélectrique (10) ou un film métallique mince au niveau de l'autre face d'extrémité de ladite fibre optique.

8. Sonde optique selon la revendication 1 ou la revendication 2, comprenant en outre un miroir réfléchissant formé par une lentille de couplage (19) et un film mince multicouche diélectrique (10) au niveau de l'autre face d'extrémité de ladite fibre optique.

9. Sonde optique selon la revendication 1 ou la revendication 2, comprenant en outre un miroir réfléchissant d'un film mince multicouche diélectrique (10) fourni à travers une huile d'alignement à indice de réfraction au niveau de l'autre face d'extrémité de ladite fibre optique et une lentille de couplage (19) prévue à l'extérieure de celle-ci.

10. Sonde optique selon la revendication 1 ou la revendication 2, dans laquelle ledit mécanisme d'ajustement de caractéristique de résonance est un élément piézoélectrique.

11. Procédé de fabrication d'une sonde optique, comprenant les étapes consistant à :
former un film multicouche diélectrique (5) en déposant en alternance au niveau d'une extrémité d'une fibre optique un film mince diélectrique présentant un indice de réfraction faible (7) et un film mince diélectrique présentant un indice de réfraction élevé (6) ;
former un masque de gravure (4) sur ledit film multicouche diélectrique (5) ; et
graver à sec ledit film multicouche diélectrique (5) pour former un alésage de transmission de lumière (33) au niveau d'une pointe de ladite sonde optique.

12. Procédé de fabrication d'une sonde optique selon la revendication 11, comprenant en outre les étapes consistant à :
former un film mince (34) utilisant un matériau diélectrique au niveau dudit alésage de transmission de lumière (33) ; et
graver ledit film mince formé (34) pour former une projection microscopique (9).

13. Microscope à effet de champ proche à sonde de balayage comprenant la sonde optique selon la revendication 1 ou la revendication 2, comprenant :
des moyens pour faire vibrer ladite sonde optique ;
des moyens pour détecter un déplacement de ladite sonde optique ;
des moyens de commande pour commander la distance entre ladite sonde optique et un échantillon ; et
un mécanisme de commande pour commander le mouvement d'un film multicouche diélectrique et d'une lentille prévue au niveau d'une extrémité de ladite sonde optique.
